# EUROPÄISCHE PATENTSCHRIFT

(11) **EP 0 297 397 B1**
(45) Veröffentlichungstag und Bekanntmachung des Hinweises auf die Patenterteilung: **04.08.1993**
(21) Anmeldenummer: 88109835.4
(22) Anmeldetag: 21.06.1988
(51) Int. Cl.: C07C 245/00, C09B 27/00, C09B 29/52, C07D 239/62

(54) **Herstellung von Diazo-und Azoverbindungen**
Preparation of diazo and azo compounds
Préparation de composés diazoiques et azoiques

(30) Priorität: 02.07.1987 DE 3721851
(43) Veröffentlichungstag der Anmeldung: 04.01.1989
(73) Patentinhaber: BAYER AG, 51368 Leverkusen (DE)
(72) Erfinder: Lorenz, Manfred, Dr., D-5000 Köln 80 (DE)

(56) Entgegenhaltungen:
- EP-A- 0 074 515
- EP-A- 0 093 306
- FR-A- 2 121 048
- FR-A- 2 342 277
- HELVETICA CHIMICA ACTA, Band 61, Heft 1, Nr. 7, 1978, Seiten 97-103, Verlag Helv. Chim. Acta, Basel, CH; H. BALLI et al.: "Azidiniumsalze"

## Beschreibung

Die Diazogruppenübertragung ist eine wohlbekannte Reaktion der organischen Chemie, die technische Anwendung gefunden hat. Bei dieser Reaktion wird eine N₂-Gruppe von einem Azid auf eine CH-acide aktivierte Methylenverbindung übertragen, wobei eine Diazoverbindung entsteht, die mit einem weiteren Molekül der gleichen oder einer anderen (CH-aciden) aktivierten Methylenverbindung zu einer Azoverbindung reagieren kann (siehe z.B.: M. Regitz u. G. Maas in "Diazo Compounds; Properties and Synthesis"; S. 326-435; Academic Press; 1986).

Bevorzugte Diazogruppenüberträger sind Sulfonylazide, insbesondere Toluolsulfonylazid und Benzolsulfonylazid. Diese Azide haben den Nachteil, stoß- und schlagempfindlich zu sein (s. z.B. Synth. Commun. 11 S. 947-956 (1981). Außerdem kann es Schwierigkeiten bereiten, die bei der Umsetzung aus den Sulfonylaziden in äquimolekularen Mengen entstehende Sulfonamide aus dem Reaktionsgemisch zu entfernen. Weiterhin sind z.B. Azidinium-tetrafluoroborate vom Typus des 2-Azido-3-ethylbenzthiazolium als Reagentien für die Azogruppenübertragung vorgeschlagen worden (Helv.Chim. Acta 61, S. 97-103 (1978)). Diese sind jedoch nur umständlich zugänglich und verpuffen bereits bei Temperaturen um 100°C.

Als weiteren Diazogruppenüberträger nennt die Literatur N,N-Dimethylamino-azido-chlormethylenimonium-chlorid (Angew. Chemie 62, S. 754-755 (1980). Die Stabilität dieser Verbindung ist nicht bekannt; jedoch ist sie ebenfalls nur umständlich und unter Ausschluß von Feuchtigkeit zugänglich und ist hydrolyse-empfindlich.

Aus Liebigs Ann. Chem. 729, S. 119-123 (1969) ist es bekannt, daß Azobarbitursäure als Nebenprodukt bei der Reaktion zwischen Barbitursäure und Carbamoylazid auftritt.

Überraschenderweise wurde nun gefunden, daß sich Azidoformamidiniumsalze ausgezeichnet als Diazogruppenüberträger auf aktivierte Methylenverbindungen eignen. Die Erfindung betrifft somit ein Verfahren zur Herstellung von Diazoverbindungen durch Diazogruppenübertragung auf aktivierte Methylenverbindungen, das dadurch gekennzeichnet ist, daß man Azidoformamidiniumsalze als Diazogruppenüberträger verwendet.

Bevorzugte Azidoformamidiniumsalze entsprechen der Formel 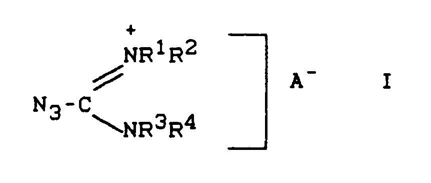
in der
- R¹, R², R³, R⁴: Wasserstoff, Alkyl, vorzugsweise C₁-C₆-Alkyl, z.B. Methyl, Ethyl, Cycloalkyl, vorzugsweise C₃-C₇-Cycloalkyl, Aralkyl, vorzugsweise Benzyl, Phenethyl bezeichnen und
- R¹ + R²: und/oder R³ + R⁴ oder R² + R³ unter Einschluß des N-Atoms bzw. der N-Atome und des C-Atoms einen 5-oder 6-gliedrigen Ring, z.B. einen Piperidin- oder Pyrrolidinring bilden können und A⁻ für ein Anion steht.

Beispiele für Verbindungen der Formel I sind: 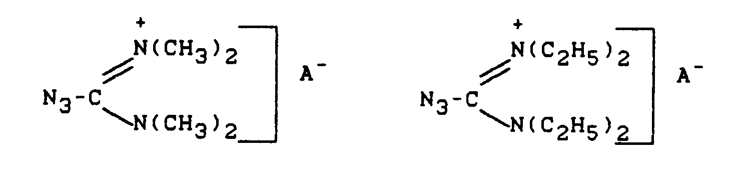
Besonders bevorzugt wird 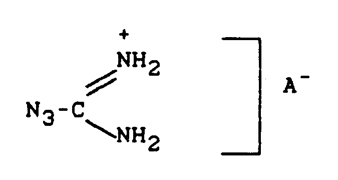
ganz besonders bevorzugt Azidoformamidiniumhydrochlorid, eingesetzt.

A⁻ steht bevorzugt für das Anion einer Mineralsäure oder einer Sulfonsäure, z.B. für Br⁻, H₂PO₄⁻, Methansulfonat, Ethansulfonat, Benzolsulfonat, Toluolsulfonat, Dodecylbenzolsulfonat und besonders bevorzugt für Cl⁻, SO₄⁻⁻, HSO₄⁻ und NO₃⁻.

Unter aktivierten Methylenverbindungen wurden insbesondere solche Verbindungen verstanden, die in einer ihrer tautomeren Formen eine Methylengruppe

H₂C〈

besitzen, die eine oder zwei benachbarte Atomgruppen aufweist, welche die Bildung eines Carbanions am C-Atom der Methylengruppe begünstigen. Solche Verbindungen wurden auch als CH-acide bezeichnet. Beispiele für geeignete nachbarständige Atomgruppen sind: 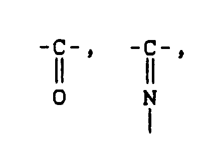
-NO₂, -CN, -SO₂-, 〉C = C〈
Im Rahmen der vorliegenden Erfindung wurden als aktivierte Methylenverbindungen vorzugsweise in der Chemie der Azofarbstoffe übliche methylenaktive Kupplungskomponenten, z.B. der Acetessigarylid-, Pyrimidin-, Pyridin-, Pyrazol-, 2,4-Dihydroxychinolin-Reihe oder Barbitursäure-Reihe, vorzugsweise der Formeln 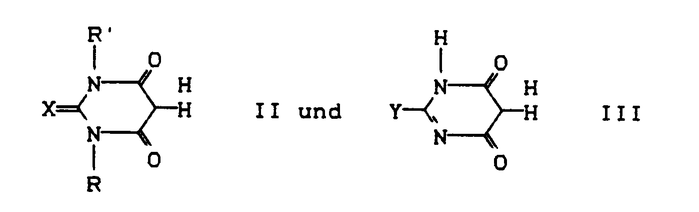
eingesetzt.

In Formel II bezeichnen
- X: =O, =N-CN oder =NR⁵,
- R⁵: R
- R,R′: Wasserstoff, Alkyl, vorzugsweise C₁-C₆-Alkyl, Cycloalkyl, vorzugsweise C₃-C₇-Cycloalkyl, Aryl, vorzugsweise Phenyl und Naphthyl oder Aralkyl, vorzugsweise Phenyl-C₁-C₄-alkyl, wobei die für R genannten Kohlenwasserstoffreste, z.B. durch -OH, F, Cl, Br, C₁-C₆-Alkyl, C₁-C₆-Alkoxy, -NO₂, -CN, -SO₂NR⁶R⁷ oder -CONR⁸R⁹ substituiert sein können, wobei
- R⁶,R⁷,R⁸,R⁹: Wasserstoff, Alkyl, vorzugsweise C₁-C₆-Alkyl, Cycloalkyl, vorzugsweise C₃-C₇-Cycloalkyl, Aryl, vorzugsweise Phenyl und Naphthyl oder Aralkyl, vorzugsweise Phenyl-C₁-C₄-alkyl, wobei die für R⁶,R⁷, R⁸, R⁹ genannten Kohlenwasserstoffreste, z.B. durch -OH, F, Cl, Br, C₁-C₆-Alkyl, C₁-C₆-Alkoxy, -NO₂, -CN substituiert sein können, bedeuten oder die Reste R⁶ + R⁷ bzw. R⁸ + R⁹ gemeinsam mit dem N-Atom einen 5- oder 6-gliedrigen Ring, vorzugsweise einen Piperidin- oder Morpholin-Ring, bilden.

In Formel III hat
- Y: die vorstehend für R angegebene Bedeutungen oder steht für einen heterocyclischen Rest oder einen Rest 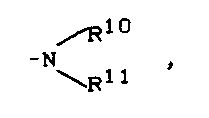 wobei
- R¹⁰: die vorstehend für R angegebenen Bedeutungen hat oder für einen Acylrest, insbesondere einen Rest R¹²-CO- oder R¹³-SO₂- steht, mit
- R¹²: = Wasserstoff, Amino, Arylamino, vorzugsweise Phenylamino oder Naphthylamino, Alkyl, vorzugsweise C₁-C₆-Alkyl, Cycloalkyl, vorzugsweise C₃-C₇-Cycloalkyl, Aryl, vorzugsweise Phenyl und Naphthyl oder Aralkyl, vorzugsweise Phenyl-C₁-C₄-alkyl, wobei die Kohlenwasserstoffreste, z.B. durch -OH, F, Cl, Br, C₁-C₆-Alkyl, C₁-C₆-Alkoxy, -NO₂, -CN substituiert sein können,
- R¹³: = Aryl, vorzugsweise Phenyl oder Naphthyl, das z.B. durch -OH, F, Cl, Br, C₁-C₆-Alkyl, C₁-C₆-Alkoxy, -NO₂, -CN substituiert sein kann.
- Y: in der Bedeutung eines heterocyclischen Restes steht bevorzugt für einen 5- oder 6-gliedrigen heterocyclischen Rest, der 1,2 oder 3 N-, O- und/oder S-Atome enthalten kann, besonders bevorzugt für einen Pyridylrest.

Geeignete aktivierte Methylenverbindungen sind z.B. die unten als Beispiele für Verbindungen der Formeln (II) und (III) aufgeführten Pyrimidinderivate.

Geeignete aktivierte Methylenverbindungen der Acetessigarylidreihe sind z.B: Acetessigsäureanilid, -2-chloranilid, -2-methoxyanilid, -2-methylanilid, -2,4-dimethylanilid, -2,5-dimethoxy-4-chloranilid, 5-Acetoacetylamino-benzimidazolon-(2).

Geeignete aktivierte Methylenverbindungen der Pyridinreihe sind zB.: 2,6-Dihydroxypyridin, 2,6-Dihydroxy-3-carbamoyl-4-methylpyridin, 2,6-Dihydroxy-3-carboxymethyl-4-methylpyridin, 2,6-Dihydroxy-3-carboxyethyl-4-methylpyridin, 1,2-Dihydro-6-hydroxy-1,4-dimethyl-3-cyano-2-oxopyridin, 1,2-Dihydro-hydroxy-1-ethyl-4-methyl-3-cyano-2-oxopyridin, 2,4,6-Trihydroxy-3-carbamoylpyridin, 2,6-Dihydroxy-pyridin-4-carbonsäure, 2,6-Dihydroxy-pyridin-4-carbonamid, 2,4-Dihydroxy-pyridin-5-carbonamid, 1,2-Dihydro-hydroxy-1,4-dimethyl-2-oxo-pyridin, 1-Hydroxy-3-methyl-4-cyan-pyrido[1,2-a]benzimidazol sowie insbesondere 2,6-Dihydroxy-4-methylpyridin und 2,6-Dihydroxy-3-cyan-4-methylpyridin, wobei die genannten Pyridinderivate gegebenenfalls auch am Ringstickstoff weiter substituiert sein können, z.B. durch Methyl, Ethyl, Propyl, 2-Hydroxyethyl, 2- oder 3-Hydroxypropyl, Benzyl, Phenyl.

Geeignete aktivierte Methylenverbindungen der Pyrazolreihe sind z.B.: 3-Methyl-1-phenyl-5-pyrazolon, 1-(2-Chlorphenyl)-3-methyl-5-pyrazolon, 1-(4-Chlorphenyl)-3-methyl-5-pyrazolon, 1-(2,5-Dichlorphenyl)-3-methyl-5-pyrazolon, 3-Methyl-1-(4-methylphenyl)-5-pyrazolon, 3-Methyl-1-(4-nitrophenyl)-5-pyrazolon, 3-Methyl-1-phenyl-5-pyrazolonimid, 3-Methyl-5-pyrazolon, 1-Phenyl-5-pyrazolon-3-carbonsäure, 1-Phenyl-5-pyrazolon-3-carbonsäureamid, 1-(4-Chlorphenyl)-5-pyrazolon-3-carbonsäure, 1-(2,5-Dichlorphenyl)-5-pyrazolon-3-carbonsäure, 1-(3,4-Dichlorphenyl)-5-pyrazolon-3-carbonsäure, 1-Phenyl-5-pyrazolon-3-carbonsäure-methyl- oder ethylester.

Weitere geeignete aktivierte Methylenverbindungen sind z.B.: 2,4-Dihydroxychinolin, 1-Methyl-2,4-dihydroxychinolin, 4-Hydroxycumarin, 2-Acetonylbenzthiazol, 2,4-Dihydroxycumarin, Dimedon, 2-Hydroxy-3-naphtholsäure, 1,3-Cyclohexandion, Acetessigsäureester, Cyanessigsäureester, Malonester, Benzolsulfonylessigester u.a.

Geeignete aktivierte Methylenverbindungen der Barbitursäure-Reihe, insbesondere der Formeln (II) und (III) sind z.B.: Barbitursäure und ihre Derivate wie 2-Amino-4,6-dihydroxypyrimidin, 2-Cyanamino-4,6-dihydroxypyrimidin, 2-Ureido-4,6-dihydroxypyrimidin, 2-Acetylamino-4,6-dihydroxypyrimidin, 2-Benzoylamino-4,6-dihydroxypyrimidin, 2-Methylsulfonylamino-4,6-dihydroxypyrimidin. 2-Guanidino-4,6-dihydroxypyrimidin, 2-Phenylsulfonylamino-4,6-dihydroxypyrimidin, 2-Anilino-4,6-dihydroxypyrimidin; 2-(2-Chloranilino)-, 2-(3-Chloranilino)-, 2-(4-Chloranilino)-4,6-dihydroxypyrimidin; 2-(3,4-Dichloranilino)-, 2-(2,5-Dichloranilino)-4,6-dihydroxypyrimidin; 2-(2-Nitroanilino)-, 2-(3-Nitroanilino)-, 2-(4-Nitroanilino)-4,6-dihydroxypyrimidin; 2-(2-Methoxyanilino)-, 2-(4-Methoxyanilino)-, 2-(2-Methylanilino)-, 2-(4-Methylanilino)-4,6-dihydroxypyrimidin; 2-(2,4-Dimethylanilino)-4,6-dihydroxypyrimidin; 2-Methylamino-, 2-Dimethylamino-4,6-dihydroxypyrimidin; 4,6-Dihydroxypyrimidin; 2-Butyl-, 2-Ethyl-, 2-Propyl-, 2-Hexyl-, 2-Benzyl-, 2-Phenyl-4,6-dihydroxypyrimidin; 1-Methyl-, 1-Ethyl-, 1-Benzyl-, 1-Phenyl-, 1-(4-Chlorphenyl)-, 1-(2-Chlorphenyl)-, 1-(3,4-Dichlorphenyl)-, 1-(4-Methylphenyl)-, 1-(2,4-Dimethylphenyl)-, 1-(3-Nitrophenyl)-, 1,3-Dimethyl-, 2-Imino-, 2-Guanimino-, 2-Phenylimino-oder 2-Benzimidazol-2-ylaminobarbitursäure; ebenfalls gut geeignet sind Barbitursäurederivate mit ankondensierten Ringen, z.B. 1H-Benz[4,5]-imidazo[1,2-a]pyrimidin-2,4-dion oder 8H-[1,2,4]triazolo[4,3-a]pyrimidin-2,4-dion sowie dessen 3-Methyl-Derivat.

Soweit die im Vorhergehenden aufgeführten Verbindungen Phenylreste oder annelierte Benzolringe enthalten, können diese weiter substituiert sein, z.B. durch 1-3 Reste aus der Reihe Fluor, Chlor, Brom, Methyl, Ethyl, Methoxy, Ethoxy, Carboxy, Sulfo, Cyan, Nitro, Carbamoyl, den Carbonsäuremethyl- oder ethylester-Rest.

Weitere erfindungsgemäß einsetzbare Diazogruppenakzeptoren sind z.B. aus den Literaturstellen EP-A1-93 306; M. Regitz, G. Maas in "Diazo Compounds; Properties and Synthesis", S. 326-435, Academic Press, 1986; Angew. Chemie 92, S. 754-755 (1980); Angew; Chemie 79, S. 786-801 (1967) und Helv. Chim. Acta 61, S. 97-117 (1978) bekannt.

Im Anschluß an die Azogruppenübertragung können die entstandenen Diazoverbindungen zu Azoverbindungen weiterkuppeln; als Kupplungskomponenten eignen sich die bereits aufgeführten aktivierten Methylenverbindungen.

Weitere geeignete Kupplungskomponenten der Pyrimidinreihe sind z.B.: 4-Amino-2,6-dihydroxypyrimidin, 2,4-Diamino-6-hydroxypyrimidin, 4,6-Diamino-2-hydroxypyrimidin, 4-Amino-2-cyanimino-6-hydroxypyrimidin, 2-Phenyl-4-amino-6-hydroxypyrimidin, Cytosin, Orotsäure, 4-Carbamoyl-2,6-dihydroxypyrimidin, 4-Carboxy-6-hydroxy-2-phenylpyrimidin, 7-Hydroxy-5-methyl-s-triazolo-[1,5-a] pyrimidin, 2,5-Dimethyl-7-hydroxy-s-triazolo-[1,4-a] pyrimidin, 5,7-Dihydroxy-s-triazolo[1,5-a]pyrimidin, 5,7-Dihydroxy-2-methyl-s-triazolo[1,5-a]pyrimidin, 7-Amino-5-hydroxy-2-methyl-s-triazolo[1,5-a]pyrimidin, 2,4-Dihydroxy-pyrimido[1,2-a]benzimidazol, 4-Amino-2-hydroxy-pyrimido[1,2-a]benzimidazol, 2H-Pyrimido[2,1-b]benzothiazol-2,4(3H)-dion.

Die Salze der Formel (I) sind bekannt oder können in Analogie zu literaturbekannten Verfahren hergestellt werden (vgl. z.B. Chem. Ber. 100, S. 3725-3735 (1967); Annalen 270, 1 ff.).

Sie sind z.B. in einfacher Weise durch Umsetzen von Salzen des technisch leicht zugänglichen Aminoguanidins mit salpetriger Säure erhältlich, die man z.B. in situ aus Alkali- und Erdalkalinitriten und starken Säuren oder aber aus Estern der salpetrigen Säure erzeugen kann. Als Lösungsmittel für diese Reaktion kommen z.B. in Frage: Wasser, niedere Alkohole wie z.B. Methanol, Ethanol, Methylglykol, Acetonitril, Methylenchlorid, Chloroform, Essigsäure w.o., bevorzugt jedoch Wasser.

Die Azidoformamidiniumsalze sind in der Regel gegen Wärme bis deutlich über 100°C stabil, sowie weitgehend schlagunempfindlich. Man kann sie daher ohne weiteres isolieren z.B. durch Absaugen oder Abdampfen des Lösungsmittels. Bevorzugt werden sie jedoch unmittelbar in dem Medium, in dem sie hergestellt wurden, weiter umgesetzt.

Die Diazogruppenübertragung verläuft nach folgendem Schema: 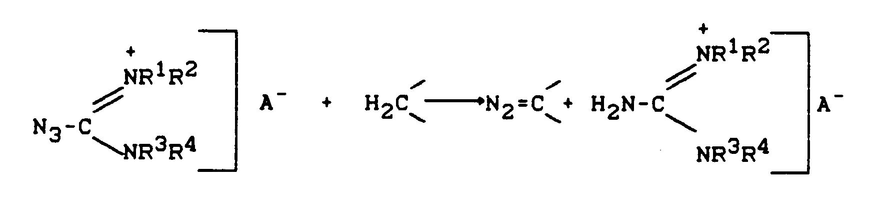
Geeignete Lösungsmittel für die Diazogruppenübertragung sind z.B. Wasser, niedere Alkohole wie Methanol, Ethanol, Propanol, Isopropanol, Glykol, Methylglykol, Ethylglykol, sowie Aceton, Acetonitril, Methylenchlorid, Chloroform, Essigsäure, Dimethylformamid, Dimethylsulfoxid u.a. Soweit diese Lösungsmittel mit Wasser mischbar sind, können sie auch als Mischungen mit Wasser eingesetzt werden. Bevorzugtes Lösungsmittel ist jedoch Wasser.

Für eine Diazogruppenübertragung bringt man das Azidoformamidiniumsalz mit einem geeigneten Substrat in dem Lösungsmittel zusammen und hält eine Zeit lang auf Temperaturen vorzugsweise zwischen 0 und 100°C, besonders bevorzugt zwischen 20 und 80°C.

Strebt man eine einfache Diazogruppenübertragung an, so setzt man das Azidoformamidiniumsalz wenigtens in äquivalenten Mengen oder in Überschuß ein. Soll sich an die Diazogruppenübertragung eine Kupplung auf das gleiche Substrat anschließen, so kann man dieses sofort in doppelt äquivalenter Menge oder in einem darüber hinausgehenden Überschuß einsetzen.

Arbeitet man im wäßrigen Medium, d.h. in Wasser oder in Mischungen aus Wasser und einem anderen Lösungsmittel, so hält man während der Reaktion zweckmäßigerweise einen pH-Wert von ≦ 7, bevorzugt ≦ 5, ein.

Die Reaktionsprodukte können in üblicher Weise isoliert werden, z.B. durch Absaugen oder Abdampfen des Lösungsmittels. Vorteilhaft ist dabei, daß die bei der Reaktion als Nebenprodukte entstehenden Guanidiniumsalze leicht wasserlöslich sind und daher leicht abgetrennt werden können.

Die Ausbeuten sind in der Regel gut. Die ausgezeichnete Verwendbarkeit von Azidoformamidiniumsalzen als Diazogruppenüberträger war nicht vorauszusehen, weil aus der Literatur bekannt ist, daß Azidoformamidin leicht zu Aminotetrazol umlagert. Darüberhinaus sind viele Azidoverbindungen als Diazogruppenüberträger ungeeignet.

Besondere Vorzüge der Azidoformamidiniumsalze sind ihre einfache und billige Herstellung, ihre hohe thermische Stabilität, ihre Wasserlöslichkeit bei gleichzeitiger hoher Hydrolysenstabilität sowie die Wasserlöslichkeit der als Nebenprodukt entstehenden Guanidiniumsalze.

Die Erfindung betrifft weiterhin die Herstellung von Azoverbindungen der Formel

D - N = N - A IV

in der
- A: den Rest einer Kupplungskomponente, vorzugsweise eine in der Chemie der Azofarbstoffe übliche methylenaktive Kupplungskomponente, und
- D: den Rest einer aktivierten Methylenverbindung bezeichnet, dadurch gekennzeichnet, daß man eine aktivierte Methylenverbindung D-H mit einem Azidoformamidiniumsalz, vorzugsweise einer Verbindung der Formel (I), unter Azogruppenübertragung zu einer Diazoverbindung umsetzt, und man diese anschließend mit einer Kupplungskomponente der Formel H-A zu Azoverbindungen der Formel (IV) umsetzt.

Als Kupplungskomponenten und aktivierte Methylenverbindungen kommen vorzugsweise die oben beispielhaft genannten Verbindungen in Betracht.

Insbesondere eignet sich das Verfahren auch zur Herstellung von symmetrischen Verbindungen der Formel

A - N = N - A V

bevorzugt zur Herstellung von Azobarbitursäure.

Vorzugsweise arbeitet man bei der Herstellung der Verbindungen IV bzw. V in einem wäßrigen Medium, bei einem pH-Wert ≦7, bevorzugt ≦5. Die oben für die Diazogrupppenübertragung genannten Reaktionsbedingungen lassen sich auch auf die Herstellung der Verbindungen (IV) und (V) übertragen, zumal man vorzugsweise ohne Zwischenisolierung der Diazoverbindungen arbeitet.

Das Verfahren eignet sich ausgezeichnet zur Synthese der Azobarbitursäure. Diese Synthese wird im folgenden beispielhaft erläutert:
Zur Synthese der Azobarbitursäure arbeitet man zweckmäßigerweise in wäßriger Lösung oder Suspension.

Das Azidoformamidiniumsalz kann unmittelbar im Reaktionsgefäß hergestellt werden, indem man ein Salz des Aminoguanidins mit salpetriger Säure umsetzt, die man in der Reaktionslösung aus einem Nitrit, z.B. einem Alkalinitrit, und etwas mehr als der äquivalenten Menge einer Säure herstellen kann. Geeignete Salze des Aminoguanidins und geeignete Säuren sind dabei solche, deren Anionen den unter A⁻ genannten entsprechen. Das so in wäßriger Lösung hergestellte Azidoformamidiniumsalz kann unmittelbar mit Barbitursäure weiter umgesetzt werden. Das Azid reagiert zunächst mit der Barbitursäure unter Diazogruppenübertragung zu Diazobarbitursäure, die dann in einem zweiten Schritt mit einem weiteren Molekül Barbitursäure zu einem Salz der Azobarbitursäure umgesetzt werden kann. Die beiden Reaktionsschritte können getrennt nacheinander oder auch gleichzeitig durchgeführt werden, wobei der Reaktionsverlauf im Wesentlichen von dem pH-Wert der Lösung abhängt. Bei einem pH-Wert unterhalb von 3, bevorzugt zwischen 0,5 und 2,5 und bei Temperaturen zwischen 0° und 100°, bevorzugt zwischen 30° und 80°, verläuft die Diazogruppenübertragung wesentlich rascher als die anschließende Kupplung, die zweckmäßigerweise in einem pH-Bereich von 3-7, bevorzugt von 4-6 bei Temperaturen von 30°-100°, bevorzugt von 50°-100° durchgeführt wird. Man kann demnach so verfahren, daß man zunächst im niedrigeren pH-Bereich eine Diazogruppenübertragung zur Diazobarbitursäure durchführt. Diese kann man auch zwischenisolieren, wobei man in diesem Fall zweckmäßigerweise ein Verhältnis von Azidoformamidiniumsalz zu Barbitursäure von 1 bis 1,2:1 wählt, oder aber man kuppelt nach Zugabe von weiterer Barbitursäure in dem höheren pH-Bereich. Man kann auch von Anfang an eine höhere Barbitursäuremenge zugeben und zunächst bei niedrigen pH-Werten die Diazogruppenübertragung durchführen und anschließend durch einfaches Erhöhen des pH-Wertes kuppeln. In diesem Fall wählt man zweckmäßigerweise ein Verhältnis von Azid zu Barbitursäure von 1:2-2,2. Schließlich ist es auch möglich Diazogruppenübertragung und Kupplung in dem höheren pH-Bereich gleichzeitig durchzuführen. Selbstverständlich ist es auch möglich, gemischte Verfahrensweisen anzuwenden oder den pH-Wert in mehreren Stufen heraufzusetzen oder die Barbitursäure in mehreren Portionen zuzufügen.

Bei der Kupplung entsteht die Azobarbarbitursäure in Form ihrer Salze z.B. als Natriumsalz. Sind andere Kationen zugegen, so können auch Salze diser Kationen oder auch gemischte Salze entstehen. Geeignete Kationen sind z.B. solche, die sich von den Metallen Natrium, Kalium, Calcium, Strontium, Barium, Eisen, Kobalt, Nickel, Mangan oder Kupfer herleiten. Diese Kationen können von Anfang an zugegen sein, oder aber in Form geeigneter Salze vor, während oder nach der Kupplungsreaktion zugegeben werden.

### Beispiele

### Beispiel 1

29,9 g (0,22 Mol) Aminoguanidinbicarbonat werden in einer Mischung von 150 ml Wasser und 54 ml 10 N Salzsäure gelöst und die Lösung durch Einwerfen von Eis auf 0°C abgekühlt. Zu dieser Mischung tropft man in ca. 15 Minuten 50 ml einer wäßrigen Lösung von Natriumnitrit, die in 100 ml 30 g Natriumnitrit gelöst enthält. Nach 5 Minuten entfernt man einen eventuell vorhandenen Nitritüberschuß mit Amidosulfonsäure. In die so erhaltene Lösung von Azidoformamidiniumhydrochlorid streut man 25,6 g (0,2 Mol) Barbitursäure und erhitzt 4 Stunden auf 70°C und 1 Stunde auf 95°. Danach kühlt man die Lösung auf 0-5° ab, saugt den Niederschlag ab und wäscht ihn mit eiskaltem Wasser. Nach dem Trocknen im Umluftschrank bei 70° erhält man 27,8 g (90,2%) Diazobarbitursäure der Formel 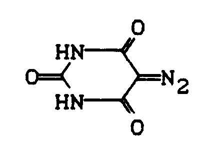
Schmp. 271-273°

### Beispiel 2

Zu einer analog zu Beispiel 1 ausgehend von 27,2 g (0,2 Mol) Aminoguanidinbicarbonat hergestellten Lösung aus Azidoformamidiniumhydrochlorid gibt man 53,8 g (0,42 Mol) Barbitursäure und erhitzt zunächst 1,5 Stunden auf 50° , gibt 6 g Natriumacetat hinzu und hält weitere 0,5 Stunden auf 50°. Man erhält eine gelbliche Suspension von Diazobarbitursäure in Mischung mit überschüssiger Barbitursäure. Nunmehr bringt man den pH-Wert mit ca. 24 ml 10 N Natronlauge auf ca. 4,5 - 4,7 und erhitzt noch 3 Stunden auf 95°. Der rote Niederschlag wird abgesaugt, mit Wasser gewaschen und im Umluftschrank bei 70° getrocknet.

Man erhält 66,7 g (98%) des Mononatriumsalzes der Azobarbitsäure der Formel 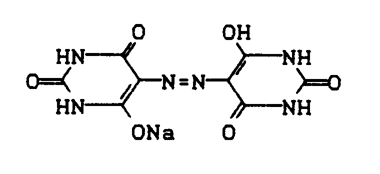
Das Produkt kristallisiert mit 2 Mol Wasser C₈H₅N₆NaO₆·2H₂O (340,2); Ber. N 24,7%; Gef. N 24,7%.

### Beispiel 3

Verfährt man wie bei Beispiel 2, setzt jedoch statt Barbitursäure eine äquivalente Menge 2-Cyanimino-4,6-dihydroxypyrimidin ein, so erhält man 77,7 g eines Produktes der Formel 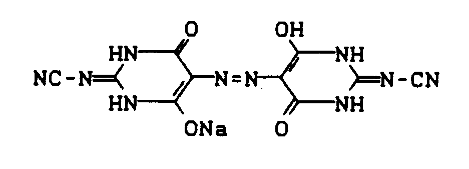
Das Produkt kristallisiert mit 2,5 Mol Wasser C₁₀H₅N₁₀NaO₄·2,5 H₂O (397,3)
Ber. N 35,3%; Gef. N 35,4%; Ber. C 30,2%; Gef. C 30,4%

### Beispiel 4

Man erhitzt 68,7 g 1,3-Dimethyl-4-imino-barbitursäure mit 200 ml Wasser und 70 ml 10 N Salzsäure 1 Stunde auf 80°C und stellt den Ansatz danach auf einen pH von 3. Zu der so erhaltenen Lösung von 1,3-Dimethyl-barbitursäure gibt man eine analog zu Versuch 1 hergestellte Lösung von Azidoformamidiniumhydrochlorid und verfährt weiter wie bei Versuch 1. Man erhält 67,6 g eines Produktes der Formel 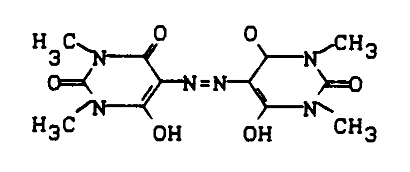
Das Produkt liegt als Ammoniumsalz vor. C₁₂H₁₇N₇O·0,5 H₂O (364,3)
Ber. N 26,9%; Gef. N 27,1% Ber. C 39,6%; Gef. C 39,8%

## Patentansprüche

1. Herstellung von Diazoverbindungen durch Diazogruppenübertragung auf aktivierte Methylenverbindungen, dadurch gekennzeichnet, daß man ein Azidoformamidiniumsalz als Diazogruppenüberträger verwendet.

2. Herstellung gemäß Anspruch 1, dadurch gekennzeichnet, daß man ein Azidoformamidiniumsalz der Formel 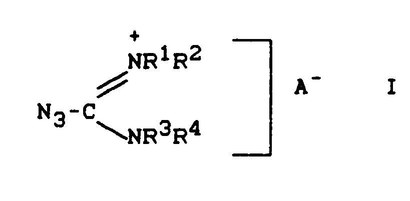 verwendet,
in der
R¹, R², R³, R⁴ Wasserstoff, Alkyl, Cycloalkyl, Aralkyl bezeichnen und R¹ + R² und/oder R³ + R⁴ oder R² + R³ unter Einschluß des N-Atoms bzw. der N-Atome einen 5- oder 6-gliedrigen Ring bilden und
A⁻ für ein Anion steht.

3. Herstellung gemäß den Ansprüchen 1 und 2, dadurch gekennzeichnet, daß man 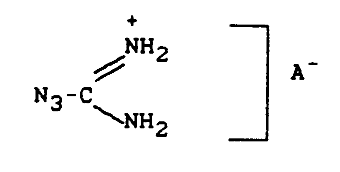 verwendet.

4. Herstellung gemäß den Ansprüchen 1-3, dadurch gekennzeichnet, daß man als aktivierte Methylenverbindung eine in der Chemie der Azofarbstoffe übliche methylenaktive Kupplungskomponente einsetzt.

5. Herstellung gemäß Anspruch 4, dadurch gekennzeichnet, daß die aktivierte Methylenverbindung der Acetessigarylid-, Pyrimidin-, Pyridin-, Pyrazol- oder 2,4-Dihydroxychinolin-Reihe entstammt oder den Formeln 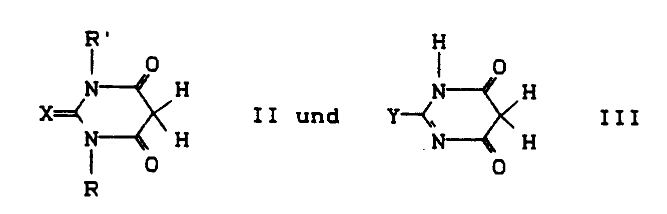 entspricht, bei denen
X =O, =N-CN oder =NR⁵,
R⁵ R
R,R′ Wasserstoff, Alkyl, Cycloalkyl, Aryl, Aralkyl, wobei die genannten Kohlenwasserstoffreste substituiert sein können und
Y R, einen heterocyclischen Rest oder einen Rest -NR¹⁰R¹¹ bezeichen mit
R¹⁰, R¹¹ = R.

6. Herstellung von Diazobarbitursäure gemäß den Ansprüchen 1-5.

7. Herstellung gemäß den Ansprüchen 1-6, dadurch gekennzeichnet, daß man im wäßrigen Medium bei einem pH-Wert ≦7 arbeitet.

8. Herstellung gemäß den Ansprüchen 1-7, dadurch gekennzeichnet, daß man im wäßrigen Medium bei einem pH-Wert ≦5 arbeitet.

9. Herstellung von Azoverbindungen der Formel
D-N=N-A (IV)
in der
A den Rest einer Kupplungskomponente und
D den Rest einer aktivierten Methylenverbindung bezeichnet, dadurch gekennzeichnet, daß man eine aktivierte Methylenverbindung mit einem Azidoformamidiniumsalz unter Azogruppenübertragung zu einer Diazoverbindung umsetzt, und man diese anschließend mit einer Kupplungskomponente H-A zu Azoverbindungen der Formel IV umsetzt.

10. Herstellung von Azobarbitursäure gemäß Anspruch 5.

## Claims

1. Preparation of diazo compounds by transfer of diazo groups to activated methylene compounds, characterised in that an azidoformamidinium salt is used as the diazo group transferring agent.

2. Preparation according to Claim 1, characterised in that an azidoformamidinium salt of the formula 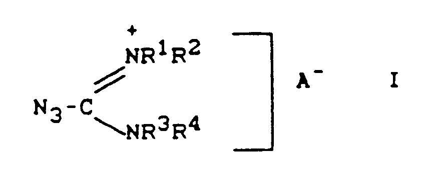 is used
in which
R¹, R², R³, R⁴ denote hydrogen, alkyl, cycloalkyl, aralkyl and R¹ + R² and/or R³ + R⁴ or R² + R³ including the N atom or N atoms form a 5- or 6-membered ring and
A⁻ represents an anion.

3. Preparation according to Claims 1 and 2, characterised in that 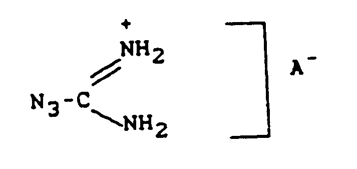 is used.

4. Preparation according to Claims 1-3, characterised in that the activated methylene compound used is a methylene-active coupling component which is common in the chemistry of azo dyes.

5. Preparation according to Claim 4, characterised in that the activated methylene compound originates from the acetoacetic arylide, pyrimidine, pyridine, pyrazole or 2,4-dihydroxyquinoline series or corresponds to the formulae 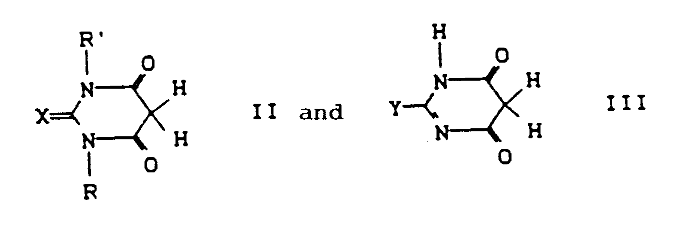 in which
X denotes =O, =N-CN or =NR⁵,
R⁵ denotes R,
R,R' denote hydrogen, alkyl, cycloalkyl, aryl, aralkyl, it being possible for the hydrocarbon radicals mentioned to be substituted and
Y denotes R, a heterocyclic radical or a radical -NR¹⁰R¹¹ where
R¹⁰, R¹¹ denote R.

6. Preparation of diazobarbituric acid according to Claims 1-5.

7. Preparation according to Claims 1-6, characterised in that the reaction is carried out in an aqueous medium at a pH of ≦ 7.

8. Preparation according to Claims 1-7, characterised in that the reaction is carried out in an aqueous medium at a pH of ≦ 5.

9. Preparation of azo compounds of the formula
**D-N=N-A (IV)**
in which
A denotes the radical of a coupling component and
D denotes the radical of an activated methylene compound, characterised in that an activated methylene compound is reacted with an azidoformamidinium salt to give, by azo group transfer, a diazo compound which is subsequently reacted with a coupling component H-A to give azo compounds of the formula IV.

10. Preparation of azobarbituric acid according to Claim 5.

## Revendications

1. Procédé de production de composés diazoïques par transfert de groupes diazo sur des composés méthyléniques activés, caractérisé en ce qu'on utilise un sel d'azidoformamidinium comme vecteur de groupes diazo.

2. Procédé suivant la revendication 1, caractérisé en ce qu'on utilise un sel d'azidoformamidinium de formule 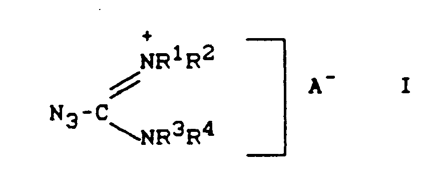 dans laquelle
R¹, R², R³, R⁴ représentent l'hydrogène, un groupe alkyle, cycloalkyle, aralkyle et R¹ + R² et/ou R³ + R⁴ ou R² + R³ forment un noyau pentagonal ou hexagonal conjointement avec l'atome d'azote ou les atomes d'azote et
A⁻ représente un anion.

3. Procédé suivant les revendications 1 et 2, caractérisé en ce qu'on utilise

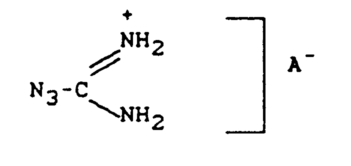

4. Procédé suivant les revendications 1 à 3, caractérisé en ce qu'on utilise comme composé méthylénique activé un copulant à groupe méthylène actif d'emploi classique dans la chimie des colorants azoïques.

5. Procédé suivant la revendication 4, caractérisé en ce que le composé méthylénique activé provient de la série arylide acétylacétique, pyrimidine, pyridine, pyrazole ou 2,4-dihydroxyquinoléine ou répond aux formules 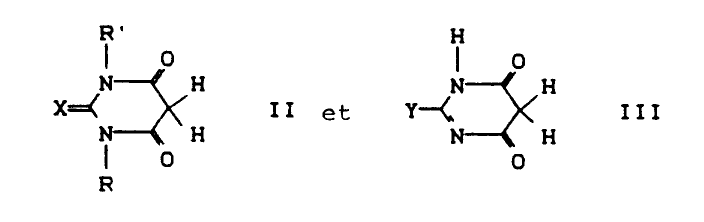 dans lesquelles
X représente =O, =N-CN ou =NR⁵,
R⁵ représente R,
R,R' représente l'hydrogène, un reste alkyle, cycloalkyle, aryle, aralkyle, les restes hydrocarbonés mentionnés pouvant être substitués, et
Y représente R, un reste hétérocyclique ou un reste de formule -NR¹⁰R¹¹ dans laquelle
R¹⁰, R¹¹ représentent R.

6. Procédé de production d'acide diazobarbiturique suivant les revendications 1 à 5.

7. Procédé suivant les revendications 1 à 6, caractérisé en ce qu'on opère en milieu aqueux a un pH égal ou inférieur à 7.

8. Procédé suivant les revendications 1 à 7, caractérisé en ce qu'on opère en milieu aqueux a un pH égal ou inférieur à 5.

9. Procédé de production de composés azoïques de formule
D-N=N-A (IV)
dans laquelle
A représente le reste d'un copulant et
D est le reste d'un composé méthylénique activé, caractérisé en ce qu'on fait réagir un composé méthylénique activé avec un sel d'azidoformamidinium avec transfert d'un groupe azo à un composé diazoïque, et on fait réagir ensuite ce dernier avec un copulant A-H pour obtenir des composés azoïques de formule IV.

10. Procédé de production d'acide azobarbiturique suivant la revendication 5.
